(19) **Europäisches Patentamt** / **European Patent Office** / **Office européen des brevets**

(11) **EP 2 092 379 B1**

(12) **FASCICULE DE BREVET EUROPEEN**

(45) Date de publication et mention de la délivrance du brevet:
**22.06.2011 Bulletin 2011/25**

(21) Numéro de dépôt: **07858694.8**

(22) Date de dépôt: **13.11.2007**

(51) Int Cl.:
*G02B 5/02* (2006.01)  *G02F 1/13357* (2006.01)
*H01J 31/30* (2006.01)  *G02B 6/00* (2006.01)
*C03C 17/00* (2006.01)

(86) Numéro de dépôt international:
**PCT/FR2007/052337**

(87) Numéro de publication internationale:
**WO 2008/059171 (22.05.2008 Gazette 2008/21)**

(54) **STRUCTURE DIFFUSANTE PLANE MULTI-COUCHES ET SON PROCEDE DE FABRICATION**

FLACHSTREUUNGSSTRUKTUR, HERSTELLUNGSVERFAHREN DAFÜR UND ANWENDUNGEN DAVON

FLAT DIFFUSING STRUCTURE, ITS MANUFACTURING PROCESS AND ITS APPLICATIONS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **14.11.2006 FR 0654898**

(43) Date de publication de la demande:
**26.08.2009 Bulletin 2009/35**

(73) Titulaire: **Saint-Gobain Glass France**
**92400 Courbevoie (FR)**

(72) Inventeurs:
• **SCHIAVONI, Michele**
**75014 Paris (FR)**
• **COUNIL, Guillaume**
**93300 AUBERVILLIERS (FR)**
• **HUIGNARD, Arnaud**
**75018 Paris (FR)**
• **BESSON, Sophie**
**75018 Paris (FR)**

(74) Mandataire: **Cardin, Elise**
**Département de la Propriété Industrielle**
**Saint-Gobain Recherche**
**39, quai Lucien Lefranc**
**93300 Aubervilliers Cedex (FR)**

(56) Documents cités:
**EP-A- 1 329 433**    **FR-A1- 2 768 522**
**US-A1- 2003 118 805**

• **BACCARO S ET AL: "Ordinary and extraordinary complex refractive index of the lead tungstate (PbWO4) crystal" 21 janvier 1997 (1997-01-21), NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, PAGE(S) 209-214 , XP004034320 ISSN: 0168-9002 figure 5**

**Description**

La présente invention concerne une structure diffusante plane comportant un premier élément qui est sensiblement transparent choisi parmi un verre, un plastique ou un oxyde de titane et d'indice de réfraction n1 donné et un deuxième élément qui est diffusant et sur une première face principale du premier élément. La présente invention concerne aussi son procédé de fabrication et ses applications.

Un système de rétro-éclairage qui consiste en une source de lumière ou « back-light » est par exemple utilisé comme source de rétro-éclairage pour des écrans à cristaux liquides, dénommés encore écrans LCD. Il apparaît que la lumière ainsi émise par le système de rétro-éclairage n'est pas suffisamment homogène et présente des contrastes trop importants. Ainsi, un diffuseur rigide associé au système de rétro-éclairage est donc nécessaire pour homogénéiser la lumière.

Parmi les écrans à cristaux liquides, on distingue les écrans incorporant une structure dite "Direct Light" pour lesquels les sources lumineuses sont situées à l'intérieur d'une enceinte et les moyens diffusants se trouvent devant les sources lumineuses, et les écrans incorporant une structure dite "Edge Light" pour lesquels les sources lumineuses sont positionnées sur le côté de l'enceinte, la lumière étant véhiculée vers les moyens diffusants en face avant par un guide d'onde. L'invention concerne plus particulièrement les écrans LCD à structure "Direct light".

Une solution satisfaisante du point de vue de l'homogénéité de la lumière consiste à recouvrir la face avant du système de rétro-éclairage d'une plaque de plastique tel qu'un polycarbonate ou un polymère acrylique contenant des charges minérales dans la masse, la plaque présentant par exemple une épaisseur de 2 mm. Mais ce matériau étant sensible à la chaleur, le plastique vieillit mal et le dégagement de chaleur conduit généralement à une déformation structurelle des moyens diffusants en plastique qui se concrétise par une hétérogénéité de la luminance de l'image projetée au niveau de l'écran LCD par exemple.

Il peut alors être préféré en tant que diffuseur rigide un substrat en verre avec une couche diffusante telle que celle décrite dans la demande de brevet FR2809496. Cette couche diffusante est composée de particules diffusantes agglomérées dans un liant.

Comme indiqué dans la demande de brevet W02004/025334, au niveau des interfaces du substrat en verre, interviennent de nombreuses réflexions de la lumière générée par le système de rétro-éclairage. Et bien que le système de rétro-éclairage possède des réflecteurs pour recycler la lumière réfléchie par le diffuseur qui n'a pu être transmise, la lumière renvoyée par les réflecteurs vers le diffuseur n'est cependant qu'en partie transmise, une partie étant à nouveau réfléchie et renvoyée encore une fois par les réflecteurs et ainsi de suite. Ainsi, la totalité de la lumière n'est pas transmise directement mais subit plusieurs va-et-vient avant de traverser le substrat diffusant avec quelques pertes.

Afin d'optimiser la luminance de l'éclairage généré via le diffuseur rigide, la demande de brevet WO2004/025334 propose un substrat en verre extraclair présentant ainsi une transmission lumineuse au moins égale à 91% sur la plage de longueurs d'onde 380 à 780 nm, et de préférence au moins égale à 91,50%, pour un verre présentant un indice de $1,52 \pm 0,04$. Le choix d'un tel verre extraclair engendre cependant un surcoût.

La présente invention a donc pour but de fournir une structure diffusante plane destinée à être associée à au moins une source lumineuse, qui permette l'obtention des performances optiques satisfaisantes à moindre coût.

A cet effet, la présente invention propose une structure diffusante plane comportant :

- un premier élément qui est sensiblement transparent et d'indice de réfraction n1 dans le visible, choisi parmi le verre, le plastique, l'oxyde de titane,
- un deuxième élément qui est diffusant et sur une première face principale du premier élément,
- un élément, dit bas indice, disposé entre le premier élément et le deuxième élément et au moins en contact optique avec le premier élément et le deuxième élément, l'élément bas indice étant sensiblement transparent et d'indice de réfraction n2 dans le visible, la différence n1-n2 étant supérieure ou égale à 0,1, et son épaisseur étant supérieure ou égale à 100 nm.

Dans une première configuration de l'invention, le deuxième élément et l'élément bas indice couvrent sensiblement entièrement la première face du premier élément. Cette structure diffusante est notamment susceptible d'être associée avec une source lumineuse qui est en regard d'une face principale du deuxième élément, notamment du côté de l'élément bas indice.

Dans une structure diffusante classique comportant un verre et une couche diffusante, les rayons lumineux qui sont diffusés par la couche diffusante à grand angle pénètrent dans le verre et parcourent de grandes distances. Ils sont donc absorbés et le flux lumineux total sortant en est diminué.

Dans la structure diffusante selon l'invention, l'élément bas indice, intercalé entre le premier élément transparent et le deuxième élément diffusant, limite l'angle des rayons rentrant dans le premier élément en les rétroréfléchissant. Ainsi l'essentiel des rayons rentrant dans le premier élément sont directement réfractés vers l'extérieur, parcourant ainsi une brève distance dans le premier élément.

On peut ainsi s'autoriser un premier élément relativement absorbant, par exemple un verre clair, sans diminuer notamment le flux lumineux total sortant.

Ainsi, le premier élément peut présenter un produit absorption linéique de la lumière en incidence normale par l'épaisseur compris entre 0,4 et 1,5 %.

Par exemple, on choisit une absorption linéique entre 2 et 6 $10^{-3}$/mm et une épaisseur de 2 mm. On peut choisir un verre clair tel que le verre PLANILUX vendu par la société SAINT GOBAIN GLASS.

On peut également souhaiter augmenter encore le flux lumineux total sortant en conservant un premier élément peu absorbant tel qu'un verre extraclair notamment verre DIAMANT vendu par la société SAINT GOBAIN GLASS.

La structure diffusante selon l'invention sert préférentiellement de diffuseur rigide d'un système de rétro-éclairage où l'effet de guidage est particulièrement pénalisant en raison du recyclage de la lumière.

Pour une efficacité renforcée dans cette première configuration ou tout autre configuration de l'invention, l'épaisseur de l'élément bas indice est supérieure ou égale à 300 nm, voire supérieure ou égale à 500 nm.

Le premier élément peut être préférentiellement rigide pour une meilleure tenue. Le premier élément peut être un plastique, notamment en polyméthacrylate de méthyle (PMMA), polycarbonate (PC), ou de préférence être un verre, moins sensible à la chaleur et au rayonnement UV (évitant les problèmes de jaunissement, de vieillissement) que le plastique.

Un premier élément en verre ou en plastique a communément un indice de réfraction de l'ordre de 1,5.

Le deuxième élément diffusant peut être simplement posé sur l'élément bas indice, l'ensemble pouvant être maintenu par des moyens périphériques (cadre clipsage etc). La structure diffusante peut aussi être monolithique, le premier élément étant porteur de l'élément bas indice et du deuxième élément.

Typiquement, on peut choisir comme premier élément une feuille plastique ou en verre sans texturation particulière.

Pour une efficacité renforcée dans cette première configuration (ou dans les configurations suivantes), la première face principale du premier élément peut être relativement lisse, par exemple définie par un paramètre de rugosité Rdq, indiquant la pente moyenne, inférieur ou égal à 5°, plus préférentiellement 2° voire 1°, avec un filtre gaussien de 0,8 mm sur une longueur de balayage de 5 millimètre.

La deuxième face principale peut être identique ou similaire à la première face ou rendue rugueuse comme décrit ultérieurement.

Pour une efficacité renforcée dans cette première configuration (ou dans les configurations suivantes), la face principale du deuxième élément qui est en contact avec l'élément bas indice peut être relativement lisse, par exemple définie par un paramètre de rugosité Rdq, indiquant la pente moyenne, inférieur ou égal à 5°, plus préférentiellement 2° voire 1°, avec un filtre gaussien de 0,8 mm sur une longueur de balayage de 5 millimètres.

Le caractère diffusant du deuxième élément peut être quantifié par une mesure classique de flou, à l'aide d'un Hazemeter, par exemple le Hazegard system XL-211 de la société BYK GARDNER. Le flou peut être supérieur à 90% voire supérieur à 95%.

Dans cette première configuration, le deuxième élément peut être un élément diffusant rapporté sur la première face, par exemple collé ou feuilleté. Il s'agit par exemple d'un plastique diffusant ou un verre de préférence mince avec une face externe (opposée à l'élément bas indice, orientée vers la source lumineuse) qui est texturée notamment imprimée, sablée ou dépolie à l'acide.

Dans cette première configuration, en particulier pour le rétro-éclairage, le deuxième élément peut de manière avantageuse comprendre ou de préférence être constitué d'une couche diffusante, notamment essentiellement minérale. Cette couche peut comprendre des particules diffusantes dans un liant par exemple d'indice de réfraction de l'ordre de 1,5.

Cette couche diffusante peut être continue, d'épaisseur constante ou avec des zones plus épaisses, par exemple des bandes en regard des sources de type tubes fluorescents.

Afin de renforcer l'homogénéité, cette couche diffusante peut, avoir avantageusement :

- une épaisseur (moyenne) qui varie selon la zone de couverture sur la surface ;
- et/ou être discontinue, par exemple au moyen d'une densité de recouvrement variable; par exemple en réalisant un réseau de disques diffusants (et/ou de tout autre motif essentiellement plein, notamment géométrique) de taille variable et/ou d'espacement variable et/ou d'épaisseur variable d'une zone à l'autre, pouvant ainsi varier d'une zone totalement couverte à une zone de points dispersés, la transition étant progressive ou non.

Dans un système de rétro éclairage, on associe généralement au diffuseur rigide (du côté observateur, à l'opposé de la source lumineuse); les éléments optiques suivants :

- d'abord, un film plastique mince, courant appelé film diffusant, formé d'un film plastique, généralement en PET, ayant sur sa face externe une couche organique suffisamment rugueuse pour renforcer la diffusion du diffuseur rigide, ce film plastique étant en outre connu pour rediriger la lumière vers la normale, c'est-à-dire vers la normale au diffuseur,

- ensuite un film plastique comportant une face interne lisse et une face externe avec des sillons ayant un angle au sommet de 90° pour rediriger encore davantage la lumière vers la normale, ce film étant couramment appelé BEF (pour « Brightness Enhancment Film » en anglais), par exemple, il s'agit du film Vikuity BEFII 90/50 vendu par la société 3M,
- enfin un polariseur réflectif permettant de transmettre une polarisation de la lumière et de réfléchir l'autre polarisation.

Comme polariseur réflectif, il existe notamment:

- un polariseur réflectif de type multicouches biréfringentes (à base de polyéthylène naphtalate ou «PEN »), par exemple un film de type « DBEF » (pour « Dual Brightness Enhancment Film » en anglais) commercialisé par la société 3M,
- un polariseur réflectif de type phases biréfringentes disperses,
- un polariseur réflectif de type à cristaux liquides cholestériques (par exemple ceux commercialisés par les sociétés MERCK, 3M, NITTO DENKO ou WACKER),
- un polariseur réflectif de type « wire-grid » (par exemple ceux commercialisés par la société MOXTEK).

Aussi, dans cette première configuration, la structure diffusante peut comprendre en outre un film diffusant, tel que décrit précédemment, par exemple posé sur la deuxième face du premier élément (face opposée à la première face, à l'élément bas indice, à la source lumineuse) et comprendre un élément de redirection de la lumière vers la normale à la structure diffusante, de type BEF, en verre ou en plastique avec une face externe (opposée au premier élément) texturée ou rugueuse.

En première variante, la structure diffusante peut comprendre une simple couche de colle ou un intercalaire de feuilletage, d'indice de réfraction sensiblement égal à n1, typiquement 1,5, sur la deuxième face du premier élément afin de coller/d'assembler directement un élément de redirection de la lumière vers la normale à la structure diffusante, de type « BEF ». Il est en effet apparu que l'élément BEF seul peut suffire pour rediriger la lumière vers la normale et que le diffuseur seul peut suffire pour homogénéiser la lumière. -

En deuxième variante, un élément de redirection de la lumière vers la normale à la structure diffusante, de type « BEF », par exemple un film plastique, est directement posé sur la deuxième face choisie suffisamment rugueuse pour limiter le couplage de lumière avec un film de type BEF.

Dans cette deuxième variante, on qualifie de préférence la rugosité de la deuxième face avec le paramètre de rugosité $R_{sk}$ choisi supérieur à -5, encore plus préférentiellement à -3, et le paramètre de rugosité Ra choisi supérieur ou égal à 500 nm, de préférence à 1 $\mu$m. Et de préférence, le paramètre $R_{Sm}$ est inférieur à 2 mm.

Soit z(x) le profil correspondant à l'écart à la moyenne de chaque point de mesure d'abscisse x.

On rappelle que Ra est défini comme suit :

$$ Ra \quad = \quad \frac{1}{\ell} \int_0^\ell \left| z \left( x \right) \right| dx $$

On rappelle que $R_{Sm}$ est défini comme suit :

$$ R_{sm} \quad = \quad \frac{1}{n} \sum_{i=1}^{i=n} Si \quad = \quad \frac{S_1 + S_2 + \dots + S_n}{n} $$ où Si est la

distance entre deux pics voisins (mesurée au niveau de la moyenne) et n le nombre de pics.

On rappelle que $R_{sk}$ (« skewness » en anglais) est défini comme suit: $R_{sk} = \frac{1}{R_q^3} \left[ \frac{1}{\ell} \int_0^\ell z^3(x) dx \right]$

où Rq est le paramètre « rms » défini comme suit : $R_q = \sqrt{\frac{1}{\ell} \int_0^\ell z^2(x) dx}$ et l est la longueur de coupure.

Pour les mesures de rugosité, on utilise un filtre gaussien de 0,8 mm sur une longueur de balayage de 15 millimètres.

En troisième variante, un élément de redirection de la lumière vers la normale à la structure diffusante, de type « BEF » est formé d'une couche structurée déposée, de préférence directement, sur la deuxième face du premier élément.

De préférence, un polariseur réflectif peut être disposé sur la face supérieure de l'élément de type « BEF ». En variante, on choisit un élément à la fois BEF et DBEF, la face prismatique du BEF étant alors la face tournée vers l'extérieur, par exemple l'élément tel que décrit dans la demande US2006/025263 ou le produit vendu par 3M sous le nom Vikuiti™ DBEF MF1-650.

Alternativement, dans une deuxième configuration de l'invention en particulier relative à un rétro-éclairage, le premier élément transparent peut être un élément de redirection de la lumière vers la normale audit premier élément et le deuxième élément pouvant alors directement être au-dessus de la source lumineuse.

Le deuxième élément diffusant peut être simplement posé sur l'élément bas indice, l'ensemble pouvant être maintenu par des moyens périphériques (cadre clipsage etc). La structure diffusante peut aussi être monolithique, le premier élément étant porteur de l'élément bas indice et du deuxième élément ou le deuxième élément étant porteur de l'élément bas indice et du premier élément.

Comme déjà indiqué pour la première configuration, le deuxième élément peut être un diffuseur rigide volumique ou surfacique, en plastique ou en verre diffusant. Le deuxième élément peut être notamment un substrat diffusant sous forme d'un substrat transparent, notamment en verre clair ou extraclair, avec sur la face externe (face orientée vers la source lumineuse opposée à l'élément bas indice, à ladite première face du premier élément) une zone diffusante. Cette zone diffusante peut être une zone dépolie à l'acide ou sablée ou texturée du substrat transparent, ou encore être une couche diffusante déposée sur le substrat transparent. Ce substrat diffusant peut être porteur de l'élément bas indice notamment s'il s'agit d'une couche déposée sur ce dernier, et une couche de colle peut servir pour rapporter le premier élément par exemple un film plastique BEF classique.

De manière préférée, pour une meilleure intégration et davantage de compacité, le premier élément, préférentiellement en verre, est porteur de l'élément bas indice et du deuxième élément, lesquels sont de préférence sous forme de couches déposées sur ce dernier.

La demanderesse a constaté qu'une structure diffusante qui serait uniquement formée d'une couche diffusante déposée directement sur la face optiquement lisse d'un élément de redirection de la lumière prismatique (de type BEF) vers la normale perd sa capacité à rediriger la lumière vers la normale. Or, en insérant l'élément bas indice, on restaure sa fonction de redirection vers la normale.

La redirection vers la normale est d'autant plus marquée que l'indice n1 est élevé. Aussi on choisit de préférence un indice de réfraction supérieur ou égal à 1,6, encore plus préférentiellement supérieur ou égal à 1,7 voire 1,8. Comme matériaux transparents et d'indice élevé on peut citer certains verres comme le verre BASF1 vendu par la société SCHOTT ou encore des oxydes comme l'oxyde de titane. Des verres haut indice sont par exemple décrits dans le document intitulé «OPTICAL GLASS DATA BOOK », version 3.03, daté du 31/05/2002, de SUMITA OPTICAL GLASS INC et disponible à l'adresse internet http://www.sumita-opt.co.jp/en/optical/data303.pdf.

En outre, pour de meilleures performances, la différence n1-n2 est la plus élevée possible, de préférence supérieure ou égale à 0,2, voire supérieure ou égale à 0,4. Notamment n2 peut être inférieur ou égal à 1,2 voire inférieur ou égal à 1,05.

De préférence, un polariseur réflectif peut être disposé sur la face supérieure du premier élément de type « BEF ».

L'élément de redirection de la lumière vers la normale peut être réalisé de différentes façons. Il peut comporter sur sa deuxième face (face externe opposée à l'élément bas indice et donc à la source) une répétition d'au moins un motif, notamment motif géométrique, les motifs étant répartis régulièrement ou aléatoirement, de largeur inférieure ou égale à 50 $\mu$m et dont la valeur absolue de la pente est en moyenne supérieure ou égale à 10°, encore plus préférentiellement 20° voire 30°.

Le motif est choisi parmi l'un au moins des motifs suivants :

- un motif allongé, en creux ou en relief, notamment un prisme de préférence avec un angle au sommet sensiblement égal à 90° ou lenticule,
- un motif tridimensionnel, en creux ou en relief, notamment de type pyramidal, avec de préférence une base de largeur inférieure ou égale à 50 $\mu$m et un angle du sommet inférieur à 140°, encore plus préférentiellement inférieur à 110°,
- un motif de type lentille de Fresnel.

De préférence, la distance entre la première face optiquement lisse et la base du motif est supérieure ou égale à 1 mm.

L'élément de redirection de la lumière vers la normale peut être formé d'une couche structurée ayant en surface ledit motif répété et de préférence d'indice de réfraction supérieur ou égal à 1,6.

Pour rediriger la lumière vers la normale la deuxième face principale peut être texturée par exemple être une face imprimée d'un verre laminé ou d'un plastique embossée tel qu'un plastique type PMMA.

Il peut alternativement par exemple s'agir d'un verre laminé et imprimé avec des pyramides inversées.

Pour rediriger la lumière vers la normale, la deuxième face principale peut en outre être rugueuse, notamment être une face dépolie à l'acide ou sablée. Il peut ainsi s'agir d'un verre sablé ou ayant subi une attaque acide comme le verre SATINOVO commercialisé par la société SAINT-GOBAIN GLASS dont la face dépolie est facettée par des motifs aléatoires.

Dans une configuration particulière de l'invention, en particulier relative à un rétro-éclairage, la structure diffusante plane peut comprendre un polariseur réflectif (de préférence directement) sur la deuxième face du premier élément notamment telle que décrite pour la première configuration, ou le polariseur réflectif fait partie du premier élément choisi de redirection de lumière vers la normale. Le deuxième élément est directement au-dessus de la source lumineuse.

Le polariseur réflectif, par exemple de type « wire-grid » peut être formé d'une couche structurée.

Par exemple, les structures souhaitées sont des réseaux de lignes avec des périodes allant de 80 nm à 400 nm.

Ce réseau peut comprendre un réseau de lignes diélectriques (transparent) et conductrices, dont le pas est inférieur à la longueur d'onde d'utilisation. Le conducteur peut être un métal, notamment en aluminium ou en argent pour une utilisation dans le domaine spectral visible. On définit alors la hauteur du réseau diélectrique (supposé être en relief) et la hauteur du réseau métallique.

Plus de configurations de réseaux sont possibles:

- le réseau diélectrique est recouvert d'une couche uniforme de métal (réseau « double métal » et sur les flancs) ;
- le réseau métallique est disposé sur les motifs du réseau diélectrique ou entre les motifs (la structure est dite « raised »).

Le premier élément peut être une simple feuille de verre ou de plastique sans texturation particulière, par exemple avec une deuxième face relativement lisse telle que décrite pour la première configuration. Le polariseur réflectif peut être formé d'une couche structurée directement sur la deuxième face de ce premier élément.

Le premier élément peut être un élément de type BEF. Le polariseur réflectif, éventuellement une couche structurée, fait partie de ce premier élément, la partie polariseur réflectif étant de préférence du côté de l'élément bas indice.

Une couche structurée utilisée pour former un élément de type BEF ou DBEF peut être obtenue par embossage (par une presse plane ou tout autre moyen). Il peut s'agir d'une couche minérale, organique ou hybride par exemple du PMMA ou une couche sol-gel obtenue à partir d'un sol précurseur du matériau constitutif. Il peut aussi s'agir d'une résine polymère photoréticulable type organoalkoxysilane, durcissable aux UV.

De nombreux éléments chimiques peuvent être à la base de la couche type sol-gel. Elle peut comprendre comme matériau constitutif essentiel au moins un composé de l'un au moins des éléments : Si, Ti, Zr, W, Sb, Hf, Ta, V, Mg, Al, Mn, Co, Ni, Sn, Zn, Ce. Il peut s'agir notamment d'un oxyde simple ou d'un oxyde mixte de l'un au moins des éléments précités.

La couche peut être essentiellement à base de silice notamment pour son adhésion et sa compatibilité avec un verre minéral.

Le sol précurseur du matériau constitutif de la couche peut être un silane, notamment un tétraéthoxysilane (TEOS) ou un (méthyltriéthoxysilane) MTEOS, ou un silicate de lithium, sodium ou potassium.

De préférence la couche embossée présente un indice de réfraction supérieur ou égal à 1,6. A titre indicatif, à 600 nm, une couche en silice a typiquement un indice de réfraction de l'ordre de 1,45, une couche en zircone a un indice de réfraction de l'ordre de 1,7, une couche en oxyde de titane a un indice de réfraction de l'ordre de 2.

Les sols-gels présentent l'avantage de supporter des traitements thermiques même élevés (par exemple opération type trempe) et de résister aux expositions UV.

Dans une troisième configuration de l'invention, l'élément bas indice couvre partiellement, notamment de manière discontinue, la première face du premier élément le deuxième élément pouvant couvrir entièrement la première face du premier élément. De préférence, l'élément bas indice et le deuxième élément peuvent être sous forme de couches, notamment essentiellement minérales.

Cette structure diffusante est par exemple susceptible d'être associée avec une source lumineuse couplée à la tranche du premier élément, il est ainsi recherché d'augmenter/d'optimiser le rendement d'extraction de la lumière dans la ou les zones sans l'élément bas indice.

On forme ainsi un panneau lumineux notamment pour un éclairage décoratif ou architectural, uniforme ou différencié, un élément d'affichage ou de signalétique.

L'élément bas indice couvre partiellement, notamment de manière discontinue, le premier élément. Il favorise le guidage, en supprimant la réfraction à l'interface premier élément/élément bas indice.

Dans toute configuration de l'invention, l'élément bas indice peut être de préférence à base d'un matériau essentiellement solide, éventuellement poreux.

De préférence, le premier élément peut être un substrat transparent et l'élément bas indice et le deuxième élément. être des couches, notamment essentiellement minérales.

Dans toute configuration de l'invention, le deuxième élément peut comprendre ou être une couche diffusante comprenant des particules diffusantes dispersées dans un liant, notamment être essentiellement minérale.

Le liant peut de préférence être choisi parmi les liants minéraux, tels que les silicates de potassium, les silicates de sodium, les silicates de lithium, les phosphates d'aluminium et les frittes de verre ou fondant.

Les particules diffusantes minérales peuvent comprendre de préférence des nitrures, des carbures ou des oxydes, les oxydes étant choisis de préférence parmi la silice, l'alumine, le zircone, le titane, le cérium ou étant un mélange d'au moins deux de ces oxydes. Les particules diffusantes présentent par exemple un diamètre moyen compris entre 0,3 et 2 $\mu$m.

On peut aussi incorporer des particules absorbant un rayonnement ultraviolet dans le domaine de 250 à 400 nm, lesdites particules absorbantes étant constituées par des oxydes aux propriétés d'absorption du rayonnement ultraviolet choisies parmi l'un ou le mélange d'oxydes suivants : oxyde de titane, oxyde de vanadium, oxyde de cérium, oxyde de zinc, oxyde de manganèse.

Dans un exemple, la couche comporte de la fritte de verre en tant que liant, de l'alumine en tant que particules diffusantes, et de l'oxyde de titane en tant que particules absorbantes dans des proportions de 1 à 20% en poids du mélange. Les particules absorbantes présentent par exemple un diamètre moyen d'au plus 0,1 $\mu$m.

L'élément bas indice peut être préférentiellement une couche poreuse notamment déposée sur le premier élément ou sur le deuxième élément. Cette couche est de préférence à base d'un matériau essentiellement minéral.

La couche poreuse peut ainsi présenter tout particulièrement une répartition sensiblement homogène dans toute son épaisseur, depuis l'interface avec le substrat ou avec une sous couche éventuelle jusqu'à l'interface avec l'air ou un autre milieu. La répartition homogène peut être tout particulièrement utile pour établir des propriétés isotropes de la couche.

Les pores peuvent avoir une forme allongée, notamment en grain de riz. Encore plus préférentiellement les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

De nombreux éléments chimiques peuvent être à la base de la couche poreuse. Elle peut comprendre comme matériau constitutif essentiel au moins un composé de l'un au moins des éléments : Si, Ti, Zr, W, Sb, Hf, Ta, V, Mg, Al, Mn, Co, Ni, Sn, Zn, Ce. Il peut s'agir notamment d'un oxyde simple ou d'un oxyde mixte de l'un au moins des éléments précités.

De préférence, la couche poreuse peut être essentiellement à base de silice notamment pour son adhésion et sa compatibilité avec un substrat verrier.

La couche poreuse selon l'invention peut être de préférence mécaniquement stable, elle ne s'effondre pas même pour des fortes concentrations de pores. Les pores peuvent être aisément séparés les uns des autres, bien individualisés. Et la couche poreuse selon l'invention est susceptible d'une cohésion et d'une tenue mécanique excellentes. On préfère tout particulièrement une couche poreuse comportant une phase solide (essentiellement) continue, formant ainsi les murs denses des pores, plutôt qu'une phase solide principalement sous forme de (nano)particules ou de cristallites.

Le matériau constitutif de la couche poreuse peut être préférentiellement choisi pour que celle-ci soit transparente à certaines longueurs d'onde. En outre, la couche peut présenter un indice de réfraction à 600 nm au moins inférieur de 0,1 à l'indice de réfraction d'une couche de même matière minérale dense (sans pores), encore plus préférentiellement 0,2 ou 0,3. De préférence cet indice de réfraction à 600 nm peut être notamment inférieur ou égal à 1,3 voire inférieur ou égal à 1,1 voire même proche de 1 (par exemple 1,05).

A titre indicatif, à 600 nm, une couche en silice non poreuse a typiquement un indice de réfraction de l'ordre de 1,45.

On peut ajuster à façon l'indice de réfraction en fonction du volume de pores. On peut utiliser en première approximation la relation suivante pour le calcul de l'indice :

$n = f.n_1 + (1-f).n_{pores}$ où f est la fraction volumique du matériau constitutif de la couche et $n_1$ son indice de réfraction et $n_{pores}$ est l'indice des pores généralement égal à 1 s'ils sont vides.

La proportion en volume de pores de la couche poreuse peut être comprise entre 10% à 90%, de préférence supérieure ou égale à 50% voire 70%.

En choisissant de la silice, on peut descendre aisément jusqu'à 1,05 et pour toute épaisseur.

La couche poreuse peut être formée suivant différentes techniques.

Dans un premier mode de réalisation, les pores sont les interstices d'un empilement non compact des billes nanométriques, notamment de silice, cette couche étant décrite par exemple dans le document US20040258929.

Dans un deuxième mode de réalisation, la' couche poreuse est obtenue par le dépôt d'un sol de silice condensé (oligomères de silice) et densifié par des vapeurs de type NH3, cette couche étant décrite par exemple dans le document WO2005049757.

Dans un troisième mode de réalisation, la couche poreuse peut aussi être de type sol gel. La structuration de la couche en pores est liée à la technique de synthèse de type sol gel, qui permet de condenser la matière minérale avec un agent porogène convenablement choisi. Les pores peuvent être vides ou éventuellement être remplis.

Comme décrit dans le document EP1329433, une couche poreuse peut être élaborée à partir d'un sol de tétraéthoxysilane (TEOS) hydrolysé en milieu acide avec un agent porogène à base de polyéthylène glycol tert phényle éther (Triton) à une concentration entre 5 et 50 g/l. La combustion de cet agent porogène à 500°C libère les pores.

D'autres agents porogènes connus sont des micelles de molécules tensioactives cationiques en solution et, éventuellement, sous forme hydrolysée, ou de tensioactifs anioniques, non ioniques, ou des molécules amphiphiles, par exemple des copolymères blocs. De tels agents génèrent des pores sous forme de canaux de petite largeur ou des pores plus ou moins ronds de petite taille entre 2 et 5 nm.

La couche poreuse peut être avec des pores de taille supérieure ou égale à 20 nm, de préférence 40 nm encore plus préférentiellement 50 nm.

Les pores de grande taille sont moins sensibles à l'eau et aux pollutions organiques susceptibles de dégrader ses propriétés notamment optiques.

La technique de synthèse de type sol-gel, permet de condenser la matière essentiellement minérale (c'est-à-dire minérale ou hybride organique minérale) avec un agent porogène convenablement choisi en particulier de taille(s) et/ ou de forme(s) bien définie(s) (allongé, sphérique, ovale etc). Les pores peuvent être de préférence vides ou éventuellement être remplis.

On peut ainsi choisir de la silice élaborée à partir de tétraétoxysilane (TEOS), de silicate de sodium, de lithium ou de potassium ou des matériaux hybrides obtenus à partir de précurseurs de type organosilane dont la formule générale est

$$R2_n \, Si(OR1)_{4-n}$$

avec n un entier entre 0 et 2, R1 une fonction alkyl de type $C_xH_{2x+1}$, R2 un groupement organique comprenant par exemple une fonction alkyl, époxy, acrylate, méthacrylate, amine, phényle, vinyle. Ces composés hybrides peuvent être utilisés mélangés ou seuls, en solution dans l'eau ou dans un mélange eau/alcool à un pH approprié.

Comme couche hybride, on peut choisir une couche à base de méthyltriéthoxysilane (MTEOS), un organosilane à groupement organique non réactif. Le MTEOS est un organosilane qui possède trois groupements hydrolysables et dont la partie organique est un méthyle, non réactif.

Si l'on souhaite conserver les fonctions organiques, on peut choisir un solvant extracteur ad hoc pour éliminer l'agent porogène choisi organique, par exemple le THF pour le polyméthacrylate de méthyle (PMMA).

La couche minérale poreuse peut être de manière préférée susceptible d'être obtenue avec au moins un agent porogène solide. L'agent porogène solide donne la possibilité de faire varier la taille des pores de la couche par un choix judicieux de sa taille.

Un agent porogène solide permet quant à lui une meilleure maîtrise de la taille des pores, notamment l'accès à des grandes tailles, une meilleure maîtrise de l'organisation des pores notamment une distribution homogène, ainsi qu'une meilleure maîtrise du taux de pores dans la couche et une meilleure reproductibilité.

Un agent porogène solide peut être creux ou plein, mono ou multi composant, minéral ou organique ou hybride.

Un agent porogène solide peut être de préférence sous forme particulaire, de préférence (quasi) sphérique. Les particules peuvent être de préférence bien individualisées, ce qui permet de bien contrôler aisément la taille des pores. La surface de l'agent porogène peut être indifféremment rugueuse ou lisse.

Comme agent porogène creux, on peut citer en particulier des billes de silice creuses.

Comme agent porogène plein, on peut citer des billes polymériques monocomposant ou bicomposant notamment avec un matériau coeur et une coque.

Un agent porogène polymérique est généralement éliminé pour obtenir la couche poreuse dont les pores peuvent avoir sensiblement la forme et la taille de l'agent porogène.

L'agent porogène solide, notamment polymérique, peut être disponible sous plusieurs formes. Il peut être stable en solution, typiquement on utilise une dispersion colloïdale, ou être sous forme d'une poudre redispersable dans un solvant aqueux ou alcool correspondant au solvant utilisé pour former le sol ou à un solvant compatible avec ce solvant.

On peut choisir en particulier un agent porogène en l'un des polymères suivants :

- en polyméthacrylate de méthyle (PMMA),
- en copolymères méthyl (méth)acrylate/acide (méth)acrylique,
- en polymères polycarbonates, polyester, polystyrène,

ou d'une combinaison de plusieurs de ces matériaux. Un autre type d'agent porogène servant pour former la couche poreuse selon l'invention peut être sous forme de nanogouttes d'un premier liquide, notamment à base d'huile, dispersées dans un deuxième liquide, notamment à base d'eau, le premier liquide et le deuxième liquide étant non miscibles. Il s'agit par exemple d'une nanoémulsion.

Les nanogouttes jouent le rôle d'agent porogène avec une taille est bien définie. Après élimination des nanogouttes, on obtient des pores sphériques sensiblement de la taille des nanogouttes.

Le deuxième liquide, qui peut être de préférence à base d'eau, peut servir à condenser le matériau constitutif de la couche. De manière préférentielle, on peut choisir un sol précurseur du matériau constitutif de la couche compatible avec ce deuxième liquide et incompatible avec le premier liquide pour ne pas déstabiliser la nanoémulsion.

Il peut s'agir en particulier de nanogouttes d'huile dispersées dans un milieu aqueux grâce à un système de tensioactifs qui assure la stabilité. Ces nanogouttes sont généralement fabriquées par fragmentation mécanique d'une phase huileuse dans une phase aqueuse en présence de tensioactifs. La taille souhaitée des nanogouttes peut être obtenue notamment grâce à au moins un passage dans un homogénéiseur haute pression.

On peut notamment choisir les nanoémulsions utilisées dans les domaines de la cosmétique et de la santé, par exemple celles décrites dans la demande de brevet WO0205683.

Les nanogouttes selon l'invention peuvent contenir au moins une huile choisie de préférence parmi les huiles d'origine animale ou végétale, les huiles minérales, les huiles de synthèse, les huiles de silicone, les hydrocarbures notamment aliphatiques, et leurs mélanges.

On peut sélectionner en particulier les huiles suivantes :

- les huiles paraffines,
- les huiles végétales hydrocarbonées.

Le matériau constitutif de la couche peut être préférentiellement la silice, hybride ou minérale, du fait du faible indice de ce matériau comme déjà expliqué. Dans ce cas, la silice peut avantageusement être dopée pour améliorer encore davantage sa tenue hydrolytique dans le cas d'applications où une bonne résistance est nécessaire (façades, extérieurs etc). Les éléments dopants peuvent de préférence être choisis parmi Al, Zr, B, Sn, Zn. Le dopant est introduit pour remplacer les atomes de Si dans un pourcentage molaire pouvant de préférence atteindre 10%, encore plus préférentiellement jusqu'à 5%.

La structure diffusante selon l'invention peut être dans un dispositif destiné à être intégré sur un mur, une façade, une porte d'un bâtiment, destiné à équiper un véhicule de transport, ou à tout autre véhicule terrestre, aquatique ou aérien, et/ou destiné au mobilier urbain ou à l'ameublement intérieur, tel qu'un abribus, un présentoir, un étalage de bijouterie, une vitrine, un élément d'étagère, une façade de meuble.

L'invention porte bien sur aussi sur l'utilisation des structures diffusantes pour réaliser un système d'éclairage, notamment un panneau à éclairage par la tranche, ou de rétro-éclairage. Et le système de rétro-éclairage peut être agencé dans un écran à cristaux liquides.

La structure diffusante peut comporter une source lumineuse, notamment des diodes électroluminescentes, couplée à la tranche du premier substrat et comporter un réseau diffusant sur la face externe du premier substrat lorsque l'élément bas indice est sous forme d'une couche (notamment poreuse, essentiellement minérale) est continue.

Le réseau externe est diffusant, sert pour extraire la lumière, et de préférence de facteur de transmission diffuse supérieur ou égal à 50%, voire à 80%. La structure diffusante peut comporter alternativement ou cumulativement un réseau rétrodiffusant sur la face interne du premier substrat, sous la couche bas indice. Le réseau interne est rétrodiffusant, de préférence de facteur de réflexion diffuse supérieur ou égal à 50%, voire à 80%.

Le réseau diffusant ou rétrodiffusant peut être formé de motifs par exemple de largeur (moyenne) de 0,2 mm à 2 mm, préférentiellement inférieure à 1 mm et d'épaisseur micronique par exemple de 5 à 10 $\mu$m. L' espacement (moyen) entre les motifs peut être 0,2 à 5 mm. Pour former un réseau on peut texturer une couche.

Le réseau diffusant ou rétrodiffusant peut être de préférence essentiellement minéral, à base de liant minéral et/ou de particules diffusantes minérales.

A titre d'exemple de réseau rétrodiffusant on peut choisir une couche diffusante telle que décrite dans la demande de brevet français publiée FR 2 809 496.

La couche bas indice est continue et la couche diffusante recouvre entièrement la couche poreuse et peut être de préférence opaque par exemple une laque.

L'éclairage peut être décoratif, d'ambiance, coloré ou non. L'éclairage peut être homogène ou non, en fonction de applications visées (vitrage à logo, signalétique, décor...). On choisit ainsi l'arrangement du réseau à façon.

Le premier substrat peut être un verre clair, extraclair. La couche bas indice être d'indice entre 1,4 et 1,1 et d'épaisseur entre 200 nm et 1 $\mu$m par exemple 600 nm.

Il peut s'agir en particulier un carrelage lumineux, de préférence en verre, pour l'aménagement intérieur, pour sol, mur, cloison, pour table, plan de travail, crédence de cuisine, pour salle de bains. Le carrelage peut être d'épaisseur entre 4 et 12 mm, par exemple 6 mm, le verre est le verre 'DIAMANT' d'indice environ 1,5,

Dans une variante, la couche bas indice est discontinue, la couche diffusante la recouvrant est rétrodiffusante et on n'utilise pas de réseau supplémentaire.

D'autre part, l'invention a également pour objet un procédé de fabrication d'un substrat avec une couche poreuse de type sol gel comportant les étapes suivantes successives :

- formation, sur le premier élément, d'une couche sol-gel obtenue à partir d'un sol précurseur du matériau constitutif de la couche bas indice, notamment de type oxyde de silice, dopée ou non, et d'un agent porogène,
- dépôt d'une couche diffusante sur la couche sol-gel,
- cuisson, de préférence simultanée et après le dépôt de la couche diffusante, de la couche sol gel et de la couche diffusante pour former respectivement l'élément bas indice et le deuxième élément.

Le procédé peut en outre comprendre avant le dépôt de la couche diffusante, l'élimination de solvant(s), à une température inférieure ou égale à 120°C, 100°C par exemple.

L'agent porogène peut comprendre de manière avantageuse des billes de préférence polymériques notamment de type PMMA, copolymère méthyl méthacrylate/acide acrylique, polystyrène ou encore les nanogouttes précitées.

Dans un premier mode de réalisation avantageux, le premier élément étant un verre, le sol étant un composé hydrolysable tel qu'un halogénure ou un alcoxyde de silicium, l'agent porogène étant de préférence sous forme de bille polymérique ou de nanogouttes (comme déjà décrit). Et le liant de la couche diffusante étant à base d'une fritte de verre, la cuisson (de préférence simultanée) est réalisée à une température supérieure ou égale à 580°C.

Dans ce premier mode, le dépôt de la couche diffusante est de préférence réalisé par sérigraphie.

Dans un deuxième mode de réalisation avantageux, le premier élément étant un verre ou un plastique, le sol étant un silicate de potassium, de sodium, ou de lithium, l'agent porogène étant de préférence sous forme de bille polymérique ou de nanogouttes (comme déjà décrit). Et le liant de la couche diffusante étant à base d'un silicate de potassium, de sodium, ou de lithium, la cuisson est réalisée à une température inférieure ou égale à 100°C.

Dans ce deuxième mode, le dépôt de la couche diffusante est de préférence réalisé par « flow coating », et la (chaque) cuisson est par exemple un séchage infrarouge avec de préférence de l'air pulsé.

D'autres avantages et caractéristiques de l'invention apparaîtront dans la suite de la description en regard des dessins annexés sur lesquels :

- La figure 1 illustre un premier système de rétro-éclairage conforme à l'invention,
- La figure 2 montre l'évolution du flux total transmis en % par le système de rétro-éclairage 1 en fonction de l'absorption du substrat de verre pour deux valeurs de l'indice de la couche bas indice n2,
- La figure 3 illustre un deuxième système de rétro-éclairage conforme à l'invention,
- La figure 4 illustre l'intensité normalisée dans la direction normale en fonction de l'indice de la couche bas indice n2, ceci pour les valeurs d'indice n1 du BEF,

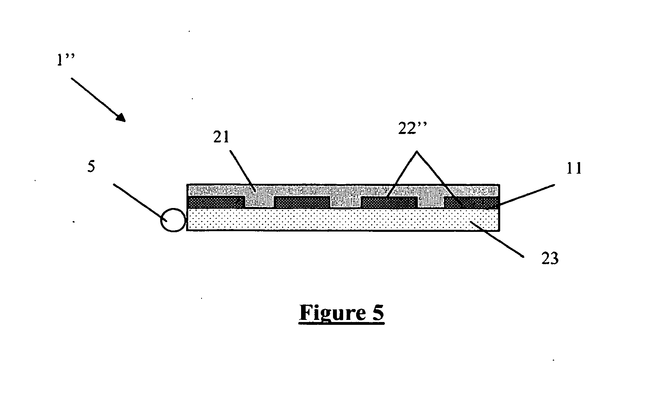

- La figure 5 illustre un panneau lumineux à éclairage par la tranche conforme à l'invention.

Par souci de clarté, les dimensions ne sont pas respectées entre les différents éléments.

EXEMPLE 1

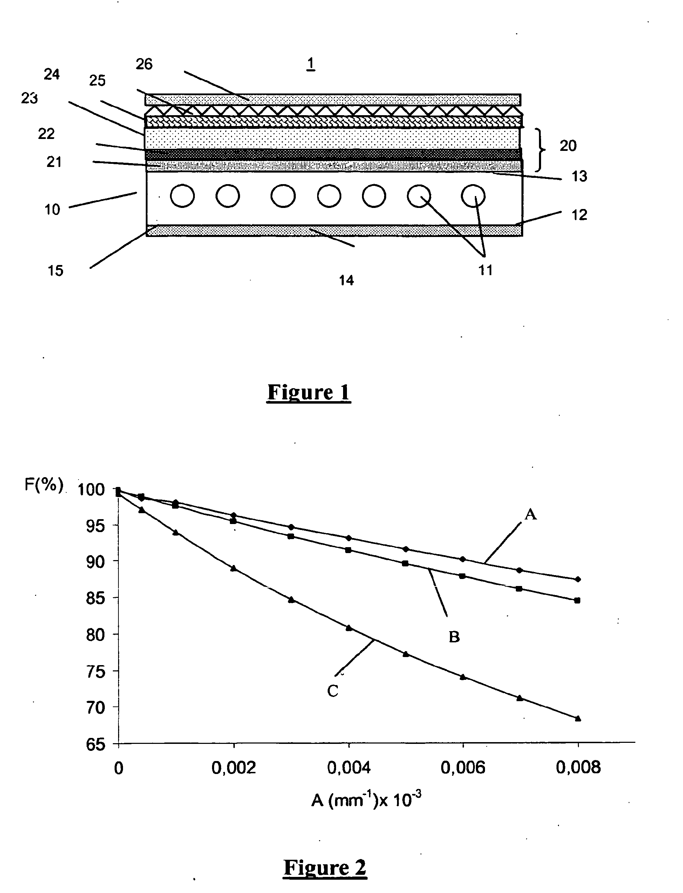

La figure 1 illustre un système de rétro-éclairage 1 destiné par exemple à être utilisé dans un écran LCD. Le système 1 comporte une enceinte 10 comprenant un illuminant ou des sources de lumière 11, et une structure optique avec un diffuseur rigide 20 qui est associé à l'enceinte 10.

L'enceinte 10, par exemple d'épaisseur environ 20 mm, comporte une partie inférieure 12 dans laquelle sont agencées les sources de lumière 11 et une partie supérieure opposée 13 qui est ouverte et depuis laquelle se propage la lumière émise des sources 11. La partie inférieure 12 présente un fond 14 contre lequel sont disposés des réflecteurs 15 destinés à réfléchir d'une part, une partie de la lumière émise par les sources 11 qui était dirigée vers la partie inférieure 12, et d'autre part, une partie de la lumière qui n'a pas été transmise au travers du substrat diffusant mais réfléchie par le substrat en verre et rétro-diffusée par la couche diffusante.

Les sources de lumière utilisées dans ces dispositifs de rétro-éclairage sont classiquement à décharge, le plus souvent des tubes ou lampes fluorescentes. Les sources de lumière 11 sont par exemple des lampes ou des tubes à décharge communément appelés CCFL pour « Cold Cathode Fluorescent Lamp », HCFL « Hot Cathode Fluorescent Lamp », DBDFL pour « Dielectric Barrier Discharge Fluorescent Lamp », ou encore des lampes du type LED pour « Light Emitting Diodes ».

Le diffuseur rigide 20 est rapporté sur la partie supérieure 13 et maintenu solidaire par des moyens de fixation mécanique non illustrés tels que de clipsage coopérant avec l'enceinte et le substrat, ou bien maintenu posé par des moyens d'engagement mutuel non illustrés tels qu'une gorge prévue sur la périphérie de la surface du substrat coopérant avec une nervure périphérique de l'enceinte.

Le diffuseur rigide 20, comporte une couche diffusante 21, de préférence essentiellement minérale, une couche transparente de bas indice 22, également de préférence essentiellement minérale, et un substrat transparent 23 de préférence en verre ayant une première face principale optiquement lisse (face interne, du coté de l'enceinte) et porteuse de ces couches 21, 22. La deuxième face principale (face externe, opposée à l'enceinte) peut être également optiquement lisse.

Le substrat 23 est en verre d'épaisseur de 2 mm environ, et d'indice de réfraction n1 dans le visible égale à 1,5 environ.

Il peut s'agir du verre PLANILUX vendu par la société SAINT GOBAIN GLASS. Il présente une transmission du rayonnement lumineux égale à 90,7% environ à 550 nm, et une absorption linéique de l'ordre de $6 \times 10^{-3}$ mm$^{-1}$.

Il peut en variante s'agir du verre DIAMANT vendu par la société SAINT GOBAIN GLASS. Il présente une transmission du rayonnement lumineux égale à 91,4% environ à 550 nm, et une absorption linéique de l'ordre de 2,3 $10^{-3}$ mm$^{-1}$.

La couche bas indice 22 épaisse d'au moins 100 nm, a une indice de réfraction n2 dans le visible au plus égal à 1,4 et de préférence le plus bas possible notamment égale à 1,2 ou 1,1 voire moins. Cette couche 22 peut être à base de silice d'indice de réfraction égale à 1,45 et comporter des porosités pour faire chuter l'indice n2.

On choisit par exemple de réaliser une couche en silice poreuse de type sol gel de 600 nm d'épaisseur et d'indice n2 de 1,2 voire 1,1.

Pour la composition de la couche diffusante 21, on se réfère par exemple à la demande de brevet français publiée FR 2 809 496. Cette couche est d'épaisseur entre 1 et 20 $\mu$m, par exemple 18 $\mu$m et d'indice de réfraction 1,5 dans le visible. On peut y rajouter particules absorbant les UV.

La structure optique comporte au dessus du diffuseur rigide 20 :

- une couche de colle 24 d'indice de réfraction de l'ordre de 1,5,
- un élément de type « BEF » 25, par exemple un film plastique, lequel comporte une face inférieure lisse et une face supérieure avec des sillons ayant un angle au sommet de 90° pour rediriger la lumière vers la normale,
- et sur la face supérieure de l'élément de type « BEF » un polariseur réflectif 26 (dit « DBEF ») par exemple de type multicouches biréfringentes, ou en variante de type phases biréfringentes disperses, de type à cristaux liquides cholestériques ou encore de type « wire-grid ».

La figure 2 montre l'évolution du flux total transmis en % par le système de rétro-éclairage 1 en fonction de l'absorption du substrat de verre (en supposant que tous les autres éléments n'introduisent pas de pertes), pour deux valeurs de l'indice de la couche bas indice n2, respectivement 1,1 (courbe A) et 1,2 (courbe B) ainsi que sans couche bas indice (courbe C) à titre de comparatif.

Il s'agit de résultats de simulations faites dans certaines hypothèses simplificatrices ne modifiant pas le sens des résultats:

- seules les pertes au niveau du substrat de verre 23 sont prises en compte,
- la couche diffusante 21 est lambertienne avec une transmission de 50%,
- le miroir plan 15 est considéré comme un réflecteur parfaitement lambertien,
- le système est considéré de taille infinie (aucun rayon n'est perdu par la tranche),
- l'indice de réfraction du BEF est de 1,5.

En l'absence de couche bas indice 22, on obtient une transmission de 73 % pour le PLANILUX et de 88 % pour le DIAMANT. Une faible différence mesurée sur une lame simple se traduit, en raison du recyclage de la lumière, par une différence considérable sur le « backlight » complet. On a alors une diminution relative du flux lumineux de 17 % lorsque l'on passe du verre extra clair DIAMANT au verre clair PLANILUX pour une couche 22 d'indice n2 égal à 1,1.

On constate aussi que l'effet de guidage augmente de manière significative lorsque l'indice n2 augmente. Ainsi, le flux transmis par un système dont le diffuseur rigide comprend un verre de type PLANILUX avec une couche bas indice 22 d'indice $n_2$ de 1,1 transmet la même quantité de lumière qu'un système avec un diffuseur rigide sans couche bas indice 22 et avec un verre qui aurait une très faible absorption linéique de $1,9 \times 10^{-3}$ mm$^{-1}$, c'est-à-dire une absorption encore inférieure à celle du verre extraclair DIAMANT.

Ces résultats confirment la possibilité d'utiliser un verre de moindre qualité optique grâce à la couche bas indice 22.

Lorsque l'indice optique du BEF augmente, la distance moyenne parcourue par un rayon dans le verre augmente. Cette augmentation traduit un recyclage plus efficace de la lumière, qui amplifie l'effet de guidage et rend encore plus nécessaire la couche bas indice 22.

Comme BEF d'indice 1,6, on peut choisir le produit dénommé «Illuminex ADF » de la société Général Electric, décrit dans la publication intitulée « A MOIRE -FREE PLATFORM FOR LCD BACKLIGHTING » des auteurs Olczak et autres, Society for Information Display, SID 2006 Digest of technical papers volume XXXVII, BOOK II, 6-9 JUIN 2006 (SAN FRANCISCO), p1336-1339.

Le diffuseur rigide 20 est particulièrement décrit pour un système de rétro-éclairage d'écran LCD mais peut être utilisé pour homogénéiser tout système d'éclairage architectural, signalétique etc.

La fabrication du diffuseur rigide, en particulier le dépôt des couches 21 et 22 est présentée ci après.

## FABRICATION DU DIFFUSEUR RIGIDE

On découpe des échantillons d'un verre float verre clair silico-sodo-calcique clair de 4 mm d'épaisseur, tel que le verre PLANILUX commercialisé par SAINT-GOBAIN GLASS. Ces échantillons sont lavés avec une solution de RBS, rincés, séchés et soumis à un traitement UV ozone pendant 45 min.

Chacun de ces échantillons, est destiné à recevoir une couche poreuse selon l'invention sur la face étain ou sur la face bain. Le procédé de formation de la couche poreuse est décrit ci-après.

La première étape de ce procédé consiste à préparer la composition liquide de traitement appelée par la suite « sol ».

Le sol est obtenu en mélangeant 20,8 g de tétraéthylorthosilicate, 18,4 g d'éthanol absolu, 7,2 g d'une solution aqueuse de pH = 2,5 acidifiée à l'aide de HCl. Le rapport molaire correspondant est 1 :4 :4. Cette composition est mélangée de préférence pendant quatre heures afin d'obtenir une hydrolyse complète du précurseur alkoxyde. Ce sol est appelé dans la suite sol A.

Dans un autre mode de réalisation (sol B) le sol de silice est élaboré par hydrolyse de tétraéthylorthosilicate (TEOS) dans de l'eau acidifiée avec de l'acide chlorhydrique à pH = 2,5, en l'absence d'éthanol. La concentration massique de TEOS dans la formulation est de 40%. Le sol est hydrolysé sous agitation vigoureuse pendant 90 minutes (la solution initialement trouble devient limpide).

La deuxième étape de ce procédé consiste à mélanger au sol de silice obtenu précédemment l'agent porogène, à savoir des billes polymériques submicroniques, en proportions diverses et de différentes natures suivant les échantillons.

Dans une première configuration (essais 1 et 2), on incorpore le sol de silice (sol A) dans une dispersion polymérique comportant des billes de copolymère méthyl méthacrylate/acide acrylique dispersées dans de l'eau (16% en poids, à pH=4). Ces billes ont un diamètre moyen total de 75 nm ± 30 nm mesurés par diffusion dynamique de la lumière avec l'appareil Malvern Nano ZS.

Dans une deuxième configuration (essai 3), on incorpore dans le sol A des billes de PMMA dispersées dans de l'éthanol (20 % en poids). Un taux donné d'éthanol est privilégié en fonction de l'épaisseur de couches souhaitée. Ces billes sont un diamètre moyen total de 80 nm ±10 nm mesuré par diffusion dynamique de la lumière (Dynamic Light Scattering en anglais) avec l'appareil Malvern Nano ZS.

Dans une troisième configuration (essais 4 et 5) on incorpore dans le sol B une nanoémulsion d'huile paraffine (16,5% en poids dans l'eau). La taille des gouttes d'huile est de 32nm ± 10 nm mesurée par diffusion dynamique de la lumière avec l'appareil Malvern Nano ZS. Un taux donné d'eau acidifiée à pH = 2,5 avec de l'acide chlorhydrique est ajouté pour ajuster l'épaisseur de la couche.

La troisième étape est le dépôt du mélange de préférence préalablement filtré à 0,45 μm. Le dépôt se fait par spin coating (essais 1, 3, 4 et 5) ou par flow coating (essai 2) sur une première face du verre, coté étain ou bain. La vitesse de rotation est par exemple égale à 1000 tours par minute.

D'autres techniques de dépôt équivalentes sont le dip coating, la pulvérisation, l'enduction laminaire, le roll coating.

Après le dépôt du sol, de préférence on peut prévoir une étape d'élimination de(s) solvant(s) à 100°C pendant 1 heure par exemple pour réduire le risque d'apparition de craquelures suite à un chauffage trop brutal.

La quatrième étape correspond au dépôt par sérigraphie d'une couche diffusante d'épaisseur 18 μm sous forme d'un liant de type fritte de verre ou fondant et des particules diffusantes minérales et éventuellement des particules absorbant les UV.

Les particules diffusantes sont de préférence des particules minérales telles que des oxydes, des nitrures ou des carbures. Parmi les oxydes, le choix peut être orienté sur la silice, l'alumine, le zircone, le titane, le cérium, ou le mélange d'au moins deux de ces oxydes. Elles présentent un diamètre moyen compris entre 0,3 et 2 μm.

La cinquième étape correspond un traitement thermique.

Les échantillons 1 à 5 sont soumis au traitement de trempe à 680°C pendant 6 minutes permettant à la fois d'éliminer les billes ou les gouttes et de densifier la couche poreuse, de cuire la couche diffusante et d'obtenir un verre trempé.

En variante, dans le cas d'un substrat plastique ou verre, on choisit comme liant un silicate de potassium de sodium ou de lithium, on élimine les billes par un solvant ad hoc extracteur du polymère, par exemple un THF dans le cas du PMMA, on réalise un traitement thermique à 80°C pour densifier la couche poreuse par exemple un séchage par infra rouge sous air pulsé.

Ensuite, on dépose par enduction (« flow coating ») la couche diffusante, dont le liant est un silicate de potassium ou de sodium ou de lithium, et l'on sèche à 80°C par exemple un séchage par infra rouge sous air pulsé.

Dans une autre variante sur substrat verre, le liant de la couche poreuse et le liant de la couche diffusante est du type silicate de potassium ou de sodium. On réalise un traitement thermique après le dépôt des deux couches à partir de 350°C pendant au moins une heure pour éliminer les billes ou les gouttes.

Pour tous les échantillons, on constate que la couche poreuse présente des pores bien individualisés et répartis de façon homogène dans toute son épaisseur, depuis l'interface avec le substrat en verre jusqu'à l'interface avec la couche diffusante.

La surface de la couche poreuse est remarquablement lisse du fait de l'élimination des billes polymériques sans fissures.

En utilisant les billes de copolymères de méthyl méthacrylate/acide acrylique, les pores de la couche poreuse ont une taille entre 30 et 70 nm reproduisant sensiblement la dispersion en taille de ces billes.

En utilisant les billes de PMMA, les pores de la couche poreuse ont une taille entre 50 et 70 nm, ce qui est proche de la taille de ces billes.

En utilisant la nanoémulsion, les pores de la couche poreuse ont une taille de l'ordre de 30 nm, ce qui est proche de la taille des nanogouttes.

On consigne dans le tableau 1 ci-après différentes caractéristiques des couches poreuses des essais 1 à 5.

Tableau 1

| Essais N° | Volume de sol ($\mu$l) | Volume de solution à billes ($\mu$l) | % volume des billes | solvant ($\mu$l) | e (nm) |
|---|---|---|---|---|---|
| 1 | 75 | 70 | 75 | 650 | 150 |
| 2 | 110 | 100 | 75 | 1000 | 400 |
| 3 | 1000 | 600 | 50 | 400 | 600 |
| 4 | 1080 | 1515 | 80 | 400 | 600 |
| 5 | 415 | 580 | 80 | 0 | 900 |

Le procédé décrit ci-dessus peut être modifié comme suit.

On pourrait aussi incorporer d'autres agents porogènes connus avec les billes par exemple des micelles de molécules tensioactives cationiques en solution et, éventuellement, sous forme hydrolysée, ou de tensioactifs anioniques, non ioniques, ou des molécules amphiphiles, par exemple des copolymères blocs. De tels agents génèrent des pores sous forme de canaux de petite largeur ou des pores plus ou moins ronds de petite taille entre 2 et 5 nm. Le tensioactif cationique peut être le bromure de cétyltriméthylammonium, le précurseur du matériau est en solution sous sa forme résultant d'une hydrolyse en milieu acide:$Si(OH)_4$ et le rapport molaire tensioactif:Si est compris entre $10^{-4}$ et 0,5.

PROPRIETES OPTIQUES

On consigne dans le tableau 2 ci-après l'indice de réfraction dans le visible des couches poreuses des essais 1 à 5.

Tableau 2

| Essais N° | e (nm) | n |
|---|---|---|
| 1 | 150 | 1,1 |
| 2 | 400 | 1,1 |
| 3 | 600 | 1,2 |
| 4 | 600 | 1,15 |
| 5 | 900 | 1,15 |

L'interface entre la couche diffusante et la couche bas indice est bien défini. La porosité intrinsèque de la couche diffusante favorise l'élimination des billes.

La présence de billes pendant le dépôt de la couche diffusante réduit les risques d'infiltration des particules diffusantes dans la couche bas indice.

La couche bas indice supporte sans problème la sérigraphie.

EXEMPLE 2

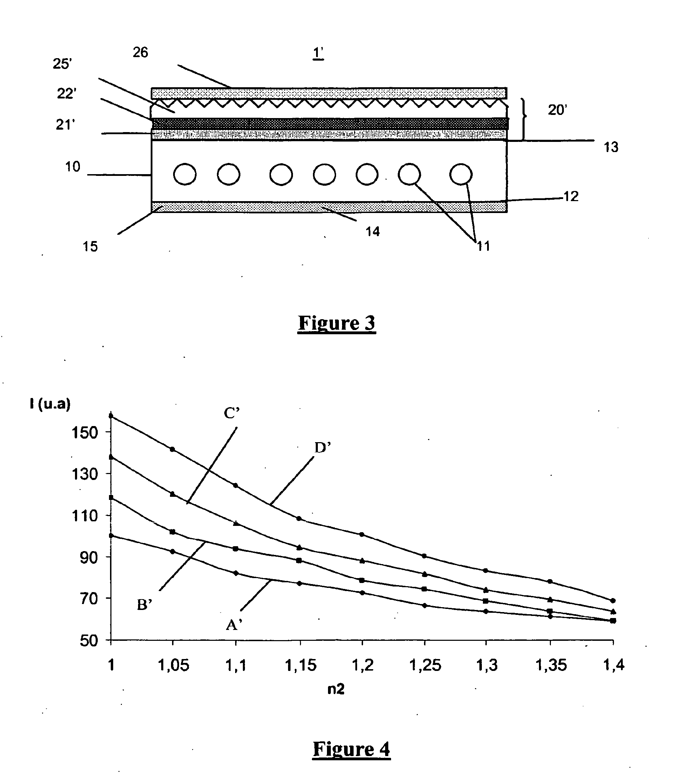

La figure 3 illustre un autre système de rétro-éclairage 1' destiné par exemple à être utilisé dans un écran LCD. Il diffère du premier système 1' en ce que le substrat 21 et la couche de colle 24 sont supprimés.

En effet, l'élément BEF, de préférence un verre, est porteur de la couche poreuse 22 et de la couche diffusante 22.

Par ailleurs, le BEF est de structure périodique d'angle au sommet $\alpha$ de préférence égal à 90° pour une meilleure efficacité. Le pas du BEF est de 40 $\mu$m, et les points du BEF ont une différence d'altitude de 20 $\mu$m.

Pour quantifier l'effet de redirection du BEF, est calculée l'intensité dans la direction normale à la structure, intensité normalisée par le flux total transmis par le système. Sur la figure.4, cette intensité normalisée $I_n$ est représentée en fonction de l'indice de la couche bas indice n2, ceci pour les valeurs d'indice n1 du BEF suivantes :

- n1 = 1,49 (courbe A'),
- n1= 1,6 (courbe B'),
- n1= 1,7 (courbe C'),
- n1= 1,8 (courbe D').

L'effet de redirection étant seul examiné, les pertes sont considérées comme nulles dans tous les éléments, et les mesures sont réalisées sans le DBEF.

On constate que l'effet de redirection augmente lorsque $n_2$ diminue et que $n_1$ augmente.

Le tracé des courbes d'intensité $I_n$ en fonction du couple ($n_1$, $n_2$) permet d'évaluer, un des trois paramètres $I_n$, $n_2$, ou $n_1$, si l'on fixe les deux autres.

Ainsi, si l'on cherche une performance $I_n$ identique à celle que l'on obtiendrait pour le couple ($n_2$ = 1, $n_1$ = 1.49) - c'est-à-dire avec un diffuseur rigide de type substrat diffusant, une lame d'air comme couche de séparation et un film plastique BEF classique - mais avec une couche bas indice d'indice $n_2$ = 1.1, il faut alors un BEF d'indice $n_1$ ~ 1.62.

Dans les exemples précédents, pour homogénéiser davantage la lumière, on peut en variante choisir une couche diffusante qui n'est pas homogène, le dépôt étant fait de façon à avoir des zones plus diffusantes en correspondance des tubes fluorescents.

Une réalisation aisée de cette couche consiste en une double sérigraphie dont une homogène. Plus précisément sur cette couche homogène on forme des disques équidistants, par exemple distants de 1 mm, dont la largeur est de l'ordre de 0,6 mm dans les zones plus diffusantes et de l'ordre de 0,2 mm dans les zones moins diffusantes.

En autre variante, on peut ne réaliser qu'une sérigraphie sous forme de disques diffusants.

EXEMPLE 3

L'invention a été décrite dans les précédents exemples pour un système de rétro-éclairage

L'invention peut aussi être un panneau lumineux 1" à éclairage par la tranche comportant un guide plan 23, par exemple un verre clair d'épaisseur 2 mm, dont la tranche est couplée à une source de lumière 5, par exemple un réseau de LED (éventuellement dans une rainure de la tranche), et comportant sur une première face principale 11 :

- une couche poreuse 22" bas indice discontinue, couche par exemple de nature similaire à la couche 22 déjà décrite précédemment, d'épaisseur de l'ordre de 300 nm et d'indice n2 égal à 1,1,
- une couche diffusante 21 sur la couche poreuse et couvrant entièrement la première face, par exemple de nature similaire à la couche 21 déjà décrite précédemment.

Lorsque la source de lumière 5 n'est pas allumée, le panneau 1" présente un aspect blanc homogène et diffusant et sert par exemple comme cloison, pour préserver l'intimité (effet privacy). Lorsque la source de lumière 5 est allumée, on perçoit par contraste les zones sans couche poreuse 22", par exemples des bandes décoratives et/ou formant un élément de signalétique, un logo, une marque ...

Dans une variante, par exemple pour un carrelage mural, la couche poreuse bas indice est continue, la couche diffusante est opaque, par exemple une laque, le guide plan est un carreau en verre épais de 6 mm et on ajoute un réseau diffusant sur la face externe du carreau.

**Revendications**

1. Système de rétro-éclairage (1, 1') ou d'éclairage (1") comportant :

- une structure diffusante plane (20, 20') comportant :

- un premier élément (23, 25') qui est sensiblement transparent, choisi parmi un verre, un plastique, ou un oxyde de titane, et d'indice de réfraction n1 dans le visible,
- un deuxième élément (21, 21') qui est diffusant et situé sur une première face principale du premier élément,

- une source lumineuse (5) associée à la structure diffusante (20, 20'),

la structure diffusante (20, 20') comprenant un élément (22, 22', 22"), dit bas indice, disposé entre le premier élément (23, 25') et le deuxième élément (21, 21') et au moins en contact optique avec les premier (23, 25') et deuxième (21, 21') éléments, l'élément bas indice (22, 22', 22") étant sensiblement transparent, d'épaisseur supérieure ou égale à 100 nm, et d'indice de réfraction n2 dans le visible, la différence n1-n2 étant supérieure ou égale à 0,1.

2. Système de rétro-éclairage (1) ou d'éclairage (1") selon la revendication 1, **caractérisé en ce que** le deuxième élément et l'élément bas indice couvrent sensiblement entièrement la première face du premier élément et le premier élément présente de préférence un produit absorption linéique de la lumière par l'épaisseur compris entre 0,4 et 1,5 %.

3. Système de rétro-éclairage ou d'éclairage selon l'une quelconque des revendications 1 ou 2, **caractérisée en ce que** le deuxième élément est une couche continue avec une épaisseur variable ou le deuxième élément est une couche discontinue, notamment sous forme d'un réseau de motifs diffusants pleins de taille variable et/ou d'espacement variable et/ou d'épaisseur variable.

4. Système de rétro-éclairage (1) selon l'une quelconque des revendications 1 à 3, **caractérisé en ce que** la structure diffusante comprend un élément de redirection de la lumière vers la normale audit premier élément (25) sur la deuxième face du premier élément et de préférence soit directement collé sur ladite deuxième face soit directement posé sur la deuxième face choisie rugueuse, soit posé sur un film diffusant disposé sur la deuxième face.

5. Système de rétro-éclairage (1') selon la revendication 1, **caractérisé en ce que** le deuxième élément (21') et l'élément bas indice (22') couvrent sensiblement entièrement la première face du premier élément (25'), le premier élément est un élément de redirection de la lumière vers la normale audit premier élément (25'), notamment comportant sur sa deuxième face une répétition d'au moins un motif, notamment motif géométrique, les motifs étant répartis régulièrement ou aléatoirement, de hauteur inférieure ou égale à 50 μm et dont la valeur absolue de la pente est en moyenne supérieure ou égale à 10°, de préférence supérieure ou égale à 20°.

6. Système de rétro-éclairage (1') selon la revendication 5, **caractérisé en ce que** le premier élément (25'), notamment essentiellement minéral, est porteur de l'élément bas indice (22') et du deuxième élément (21'), de préférence l'élément bas indice et le deuxième élément sont des couches, notamment essentiellement minérales, déposées sur la première face du premier élément.

7. Système de rétro-éclairage ou d'éclairage selon l'une quelconque des revendications précédentes, **caractérisé en ce qu'**elle comprend un élément de redirection de la lumière vers la normale audit élément, élément formé d'une couche structurée ayant en surface une répétition d'au moins un motif, notamment motif géométrique, les motifs étant répartis régulièrement ou aléatoirement, de hauteur inférieure ou égale à 50 μm et dont la valeur absolue de la pente est en moyenne supérieure ou égale à 10°, de préférence supérieure ou égale à 20°, par exemple une couche de type sol gel, ledit élément étant soit un élément déposé, de préférence directement, sur la deuxième face du premier élément, soit ledit premier élément.

8. Système de rétro-éclairage selon l'une quelconque des revendications 5 à 7 **caractérisé en ce que** le premier élément est d'indice supérieur ou égal à 1,6.

9. Système de rétro-éclairage (1, 1') selon l'une quelconque des revendications précédentes **caractérisé en ce qu'**elle comprend un polariseur réflectif (26) éventuellement étant formé d'une couche structurée, disposé sur la deuxième face du premier élément ou faisant partie du premier élément choisi de redirection de lumière vers la normale.

**10.** Système d'éclairage (1") selon la revendication 1, **caractérisé en ce que** l'élément bas indice (22") couvre partiellement, notamment de manière discontinue, la première face du premier élément et de préférence l'élément bas indice (22") et le deuxième élément (21) sont sous forme de couches.

**11.** Système de rétro-éclairage (1, 1') ou d'éclairage (1") selon l'une quelconque des revendications précédentes, **caractérisé en ce que** la différence n1-n2 est supérieure ou égale à 0,2, de préférence supérieure ou égale à 0,4, notamment n2 est inférieur ou égal à 1,2 voire 1,05.

**12.** Système de rétro-éclairage (1, 1') ou d'éclairage (1") selon l'une quelconque des revendications précédentes, **caractérisé en ce que** la structure diffusante plane (20, 20', 1, 1', 1") comprend une couche diffusante (21, 21') formant ou faisant partie du deuxième élément, couche diffusante comprenant un liant et des particules diffusantes dispersées dans le liant.

**13.** Système de rétro-éclairage (1, 1') ou d'éclairage (1") selon la revendication précédente, **caractérisé en ce que** le liant est choisi parmi les liants minéraux, tels que les silicates de potassium, les silicates de sodium, les silicates de lithium, les phosphates d'aluminium et les frittes de verre ou les fondants, **en ce que** les particules diffusantes sont minérales et de préférence des nitrures, des carbures ou des oxydes comme la silice, l'alumine, le zircone, le titane, le cérium ou un mélange d'au moins deux de ces oxydes, et **en ce que** la couche comporte éventuellement des particules absorbant un rayonnement ultraviolet dans le domaine de 250 à 400 nm, lesdites particules absorbantes étant constituées par des oxydes aux propriétés d'absorption du rayonnement ultraviolet choisies parmi l'un ou le mélange d'oxydes suivants : oxyde de titane, oxyde de vanadium, oxyde de cérium, oxyde de zinc, oxyde de manganèse.

**14.** Système de rétro-éclairage (1, 1') ou d'éclairage (1") selon l'une quelconque des revendications précédentes, **caractérisé en ce que** ledit élément bas indice (22, 22', 22") est une couche poreuse et de préférence à base d'un matériau essentiellement minéral, notamment de la silice éventuellement dopée.

**15.** Système de rétro-éclairage (1, 1') ou d'éclairage (1") selon la revendication précédente, **caractérisé en ce que** la couche poreuse (22, 22', 22") est de type sol gel et de préférence avec des pores de taille supérieure ou égale à 20 nm.

**16.** Système de rétro-éclairage (1, 1') ou d'éclairage (1") selon l'une quelconque des revendications 14 à 15, **caractérisé en ce que** la couche poreuse (22, 22', 22") est de type sol gel et la couche poreuse est susceptible d'être obtenue avec au moins un agent porogène sous forme de nanogouttes d'un premier liquide, notamment à base d'huile, nanogouttes dispersées dans un deuxième liquide, notamment à base d'eau, les premier et deuxième liquides étant non miscibles, et/ou avec au moins un agent porogène essentiellement solide, notamment sous forme de particules polymériques.

**17.** Système de rétro-éclairage (1, 1') ou d'éclairage (1") selon l'une quelconque des revendications 14 à 16, **caractérisé en ce que** la proportion en volume de pores de la couche poreuse (22, 22', 22") est supérieure ou égale à 50% de préférence supérieure ou égale à 70%.

**18.** Système de rétro-éclairage ou d'éclairage (1") selon l'une quelconque des revendications précédentes, **caractérisé en ce que** la source lumineuse (5), notamment des diodes électroluminescentes, est couplée à la tranche du premier substrat (23) et **en ce que** soit l'élément bas indice est sous forme d'une couche continue et la structure comporte en outre un réseau diffusant sur la face externe du premier substrat, soit l'élément bas indice est sous forme d'une couche (22') discontinue.

**19.** Système de rétro-éclairage (1, 1') ou d'éclairage (1") selon l'une des revendications 1 à 17 **caractérisé en ce** q^il forme un panneau à éclairage par la tranche (1") notamment par des diodes électroluminescentes, un carrelage lumineux (1"), notamment en verre, pour l'aménagement intérieur, pour sol, mur, pour table, plan de travail, crédence de cuisine, cloison, pour salle de bains.

**20.** Procédé de fabrication de la structure diffusante (20, 20') du système de rétro-éclairage ou d'éclairage selon l'une des revendications 1 à 19 comportant les étapes suivantes successives:

    - formation, sur le premier élément (23, 25'), d'une couche sol-gel obtenue à partir d'un sol précurseur du matériau constitutif de la couche bas indice et d'un agent porogène,
    - dépôt d'une couche diffusante (21, 21') sur la couche sol-gel,

- cuisson, de préférence simultanée et après le dépôt de la couche diffusante, de la couche sol gel et de la couche diffusante pour former l'élément bas indice et le deuxième élément.

**21.** Procédé de fabrication de la structure diffusante selon la revendication précédente **caractérisé en ce que** le premier élément étant un verre, le sol étant un composé hydrolysable tel qu'un halogénure ou un alcoxyde de silicium, dopée ou non, l'agent porogène étant de préférence sous formé de bille polymérique ou de nanogouttes et le liant de la couche diffusante étant à base d'une fritte de verre, la cuisson de préférence simultanée et réalisée à une température supérieure ou égale à 580°C.

**22.** Procédé de fabrication de la structure diffusante selon la revendication 20 comportant les étapes suivantes : le premier élément étant un verre ou un plastique, le sol étant un silicate de potassium, de sodium, ou de lithium, l'agent porogène étant de préférence sous forme de bille polymérique ou de nanogouttes et ie liant de la couche diffusante étant à base d'un silicate de potassium, de sodium, ou de lithium, la ou les cuissons est/sont réalisée(s) à une température inférieure ou égale à 100°C.

**Claims**

**1.** Back-lighting system (1, 1') or lighting system (1") comprising:

- a flat diffusing structure (20, 20') comprising:

- a first element (23, 25') which is substantially transparent, chosen from a glass, a plastic or a titanium oxide, and has a refractive index $n_1$ in the visible and
- a second element (21, 21') which is diffusing and located on a first main face of the first element; and

- a light source (5) associated with the diffusing structure (20, 20'), the diffusing structure (20, 20') comprising a low-index element (22, 22', 22"), placed between the first element (23, 25') and the second element (21, 21'), and at least in optical contact with the first (23, 25') and second (21, 21') elements, the low-index element (22, 22', 22") being substantially transparent, with a thickness equal to or greater than 100 nm and a refractive index $n_2$ in the visible, the difference $n_1$-$n_2$ being equal to or greater than 0.1.

**2.** Back-lighting system (1) or lighting system (1") according to Claim 1, **characterized in that** the second element and the low-index element cover substantially the entire first face of the first element and the first element preferably has a factor formed by the linear light absorption multiplied by the thickness of between 0.4 and 1.5%.

**3.** Back-lighting or lighting system according to either of Claims 1 and 2, **characterized in that** the second element is a continuous layer with a variable thickness, or the second element is a discontinuous layer, especially in the form of an array of solid scattering features of variable size and/or variable spacing and/or variable thickness.

**4.** Back-lighting system (1) according to any one of Claims 1 to 3, **characterized in that** the diffusing structure comprises an element for redirecting the light towards the normal to said first element (25) on the second face of the first element and preferably either directly bonded to said second face or directly placed on the second face, which is chosen to be rough, or placed on a diffusing film placed on the second face.

**5.** Back-lighting system (1') according to Claim 1, **characterized in that** the second element (21') and the low-index element (22') cover substantially entirely the first face of the first element (25'), the first element is an element for redirecting the light towards the normal to said first element (25'), especially one having on its second face a repetition of at least one feature, especially a geometric feature, the features being uniformly or randomly distributed, with a height of 50 μm or less, and the absolute value of the slope of which is on average equal to or greater than 10°, preferably equal to or greater than 20°.

**6.** Back-lighting system (1') according to Claim 5, **characterized in that** the first element (25'), especially an essentially mineral element, bears the low-index element (22') and the second element (21'), preferably the low-index element and the second element are layers, especially essentially mineral layers, deposited on the first face of the first element.

**7.** Back-lighting or lighting system according to any one of the preceding claims, **characterized in that** it comprises an element for redirecting the light towards the normal to said element, which element is formed from a structured layer having on its surface a repetition of at least one feature, especially a geometric feature, the features being uniformly or randomly distributed, with a height of 50 $\mu$m or less, and the absolute value of the slope of which is on average equal to or greater than 10°, preferably equal to or greater than 20°, for example a layer of the sol-gel type, said element either being an element deposited, preferably directly, on the second face of the first element, or said first element.

8. Back-lighting system according to any one of Claims 5 to 7, **characterized in that** the first element has an index equal to or greater than 1.6.

9. Back-lighting system (1, 1') according to any one of the preceding claims, **characterized in that** it comprises a reflective polarizer (26) possibly being formed from a structured layer, placed on the second face of the first element or forming part of the first element chosen for redirecting the light towards the normal.

10. Lighting system (1") according to Claim 1, **characterized in that** the low-index element (22") partially covers, especially discontinuously, the first face of the first element, and preferably the low-index element (22") and the second element (21) are in the form of layers.

11. Back-lighting system (1, 1') or lighting system (1") according to any one of the preceding claims, **characterized in that** the difference $n_1$-$n_2$ is equal to or greater than 0.2, preferably equal to or greater than 0.4, especially $n_2$ is less than or
equal to 1.2 or even 1.05.

12. Back-lighting system (1, 1') or lighting system (1") according to any one of the preceding claims, **characterized in that** the flat diffusing structure (20, 20', 1, 1', 1") comprises a diffusing layer (21, 21') forming or being part of the second element, which diffusing layer comprises a binder and scattering particles dispersed in the binder.

13. Back-lighting system (1, 1') or lighting system (1") according to the preceding claim, **characterized in that** the binder is chosen from mineral binders, such as potassium silicates, sodium silicates, lithium silicates, aluminium phosphates and glass frittes or fluxes, **in that** the scattering particles are mineral particles and preferably nitrides, carbides or oxides such as silica, alumina, zirconia, titanium oxide, cerium oxide or a mixture of at least two of these oxides, and **in that** the layer optionally includes particles that absorb ultraviolet radiation in the 250 to 400 nm range, said absorbent particles being formed by oxides having ultraviolet radiation absorption properties, chosen from one of the following oxides or a mixture thereof: titanium oxide, vanadium oxide, cerium oxide, zinc oxide, manganese oxide.

14. Back-lighting system (1, 1') or lighting system (1") according to any one of the preceding claims, **characterized in that** said low-index element (22, 22', 22") is a porous layer and preferably based on an essentially mineral material, especially optionally doped silica.

15. Back-lighting system (1, 1') or lighting system (1") according to the preceding claim, **characterized in that** the porous layer (22, 22', 22") is of the sol-gel type and preferably has pores with a size equal to or greater than 20 nm.

16. Back-lighting system (1, 1') or lighting system (1") according to either of Claims 14 and 15, **characterized in that** the porous layer (22, 22', 22") is of the sol-gel type and the porous layer can be obtained with at least one pore-forming agent in the form of nanodroplets of a first liquid, especially an oil-based liquid, the nanodroplets being dispersed in a second liquid, especially a water-based liquid, the first and second liquids being immiscible, and/or with at least one essentially solid pore-forming agent, especially in the form of polymeric particles.

17. Back-lighting system (1, 1') or lighting system (1") according to any one of Claims 14 to 16, **characterized in that** the volume proportion of pores of the porous layer (22, 22', 22") is equal to or greater than 50%, preferably equal to or greater than 70%.

18. Back-lighting system or lighting system (1") according to any one of the preceding claims, **characterized in that** the light source (5), especially light-emitting diodes, is coupled to the edge of the first substrate (23) and **in that** either the low-index element is in the form of a continuous layer and the structure further includes a scattering grating on the external face of the first substrate, or the low-index element is in the form of a discontinuous layer (22').

19. Back-lighting system (1, 1') or lighting system (1") according to any one of Claims 1 to 17, **characterized in that** it forms an edge-lit panel (1"), especially lit by light-emitting diodes, for a luminous tile (1"), especially made of glass, for an interior furnishing, for a floor or wall, for a table, for a worktop, for a kitchen sideboard, for a partition or for a bathroom.

20. Process for manufacturing the diffusing structure (20, 20') of the back-lighting or lighting system according to any one of Claims 1 to 19, comprising the following successive steps:

- formation, on the first element (23, 25'), of a sol-gel layer obtained from a precursor sol of the constituent material of the low-index layer and from a pore-forming agent;
- deposition of a diffusing layer (21, 21') on the sol-gel layer; and
- curing, preferably simultaneously and after the diffusing layer has been deposited, of the sol-gel layer and of the diffusing layer in order to form the low-index element and the second element.

21. Process for manufacturing the diffusing structure according to the preceding claim, **characterized in that** when the first element is a glass, and the sol is a hydrolysable compound, such as a halide or a silicon alkoxide, whether doped or not, when the pore-forming agent is preferably in the form of polymeric beads or nanodroplets and when the binder of the diffusing layer is based on a glass fritte, the preferably simultaneous firing is carried out at a temperature of 580°C or higher.

22. Process for manufacturing the diffusing structure according to Claim 20, comprising the following steps: when the first element is a glass or a plastic, when the sol is a potassium, sodium or lithium silicate, when the pore-forming agent is preferably in the form of polymeric beads or nanodroplets and when the binder of the diffusing layer is based on a potassium, sodium or lithium silicate, the curing operation(s) is(are) carried out at a temperature of 100°C or below.


**Patentansprüche**

1. System zur Hintergrundbeleuchtung (1, 1') oder Beleuchtung (1") umfassend:

- eine flache streuende Struktur (20, 20') mit:

- einem ersten Element (23, 25'), das im Wesentlichen transparent ist, aus einem Glas, einem Kunststoff oder einem Titanoxid ausgewählt ist und einen Brechungsindex n1 im sichtbaren Bereich aufweist,
- einem zweiten Element (21, 21'), das streuend ist und sich auf einer ersten Hauptseite des ersten Elements befindet,

- eine Lichtquelle (5), die der streuenden Struktur (20, 20') zugeordnet ist,

wobei die streuende Struktur (20, 20') ein sogenanntes Niedrigindexelement (22, 22', 22") umfasst, das zwischen dem ersten Element (23, 25') und dem zweiten Element (21,21') angeordnet und mit dem ersten Element (23, 25') und dem zweiten Element (21, 21') wenigstens in optischem Kontakt ist, wobei das Niedrigindexelement (22, 22', 22") im Wesentlichen transparent ist, eine Dicke von über oder gleich 100 nm und einen Brechungsindex n2 im sichtbaren Bereich aufweist, wobei die Differenz n1-n2 größer oder gleich 0,1 ist.

2. System zur Hintergrundbeleuchtung (1) oder Beleuchtung (1") nach Anspruch 1, **dadurch gekennzeichnet, dass** das zweite Element und das Niedrigindexelement die erste Seite des ersten Elements im Wesentlichen vollständig bedecken und das erste Element vorzugsweise ein Produkt aus linearer Absorption des Lichts und Dicke zwischen 0,4 und 1,5 % aufweist.

3. System zur Hintergrundbeleuchtung oder Beleuchtung nach einem der Ansprüche 1 oder 2, **dadurch gekennzeichnet, dass** das zweite Element eine durchgehende Schicht mit einer veränderlichen Dicke ist oder das zweite Element eine unterbrochene Schicht ist, insbesondere in Form eines Netzes aus massiven, streuenden Mustern mit veränderlicher Größe und/oder veränderlichem Abstand und/oder veränderlicher Dicke.

4. System zur Hintergrundbeleuchtung (1) nach einem der Ansprüche 1 bis 3, **dadurch gekennzeichnet, dass** die streuende Struktur ein Element zum Umleiten des Lichts in Richtung der Normalen zu dem ersten Element (25) auf der zweiten Seite des ersten Elements umfasst, das vorzugsweise entweder direkt auf die zweite Seite aufgeklebt oder direkt auf die rauh gewählte zweite Seite aufgelegt oder auf einen auf der zweiten Seite angeordneten streuenden Film aufgelegt ist.

5. System zur Hintergrundbeleuchtung (1') nach Anspruch 1, **dadurch gekennzeichnet, dass** das zweite Element (21') und das Niedrigindexelement (22') die erste Seite des ersten Elements (25') im Wesentlichen vollständig bedecken, das erste Element ein Element zum Umleiten des Lichts in Richtung der Normalen zu dem ersten Element (25') ist, das insbesondere auf seiner zweiten Seite eine Wiederholung wenigstens eines Musters, insbesondere geometrischen Musters umfasst, wobei die Muster gleichmäßig oder zufällig verteilt sind, eine Höhe von weniger als oder gleich 50 μm aufweisen und der Absolutwert der Neigung im Durchschnitt größer oder gleich 10°, vorzugsweise größer oder gleich 20° ist.

6. System zur Hintergrundbeleuchtung (1') nach Anspruch 5, **dadurch gekennzeichnet, dass** das erste, insbesondere im Wesentlichen mineralische Element (25') das Niedrigindexelement (22') und das zweite Element (21') trägt, vorzugsweise das Niedrigindexelement (22') und das zweite Element Schichten, insbesondere im Wesentlichen mineralische, sind, die auf der ersten Seite des ersten Elements abgeschieden sind.

7. System zur Hintergrundbeleuchtung oder Beleuchtung nach einem der vorstehenden Ansprüche, **dadurch gekennzeichnet, dass** sie ein Element zum Umleiten des Lichts in Richtung der Normalen zu dem Element umfasst, Element, das von einer strukturierten Schicht gebildet ist, die an der Oberfläche eine Wiederholung wenigstens eines Musters, insbesondere geometrischen Musters aufweist, wobei die Muster gleichmäßig oder zufällig verteilt sind, eine Höhe von weniger als oder gleich 50 μm aufweisen und der Absolutwert der Neigung im Durchschnitt größer oder gleich 10°, vorzugsweise größer oder gleich 20° ist, beispielsweise einer Schicht vom Typ Sol-Gel, wobei das Element entweder ein auf der zweiten Seite des ersten Elements abgeschiedenes, vorzugsweise direkt abgeschiedenes Element oder das erste Element ist.

8. System zur Hintergrundbeleuchtung nach einem der Ansprüche 5 bis 7, **dadurch gekennzeichnet, dass** das erste Element einen Index größer oder gleich 1,6 aufweist.

9. System zur Hintergrundbeleuchtung (1, 1') nach einem der vorstehenden Ansprüche, **dadurch gekennzeichnet, dass** sie einen reflektiven Polarisator (26), eventuell von einer strukturierten Schicht gebildet, umfasst, der auf der zweiten Seite des ersten Elements angeordnet oder Teil des gewählten ersten Elements zum Umleiten von Licht in Richtung der Normalen ist.

10. Beleuchtungssystem (1") nach Anspruch 1, **dadurch gekennzeichnet, dass** das Niedrigindexelement (22") die erste Seite des ersten Elements teilweise, insbesondere diskontinuierlich bedeckt und vorzugsweise das Niedrigindexelement (22") und das zweite Element (21) in Form von Schichten vorliegen.

11. System zur Hintergrundbeleuchtung (1, 1') oder Beleuchtung (1") nach einem der vorstehenden Ansprüche, **dadurch gekennzeichnet, dass** die Differenz n1-n2 größer oder gleich 0,2, vorzugsweise größer oder gleich 0,4 ist, insbesondere n2 kleiner oder gleich 1,2, sogar 1,05 ist.

12. System zur Hintergrundbeleuchtung (1, 1') oder Beleuchtung (1") nach einem der vorstehenden Ansprüche, **dadurch gekennzeichnet, dass** die flache streuende Struktur (20, 20', 1, 1', 1") eine Streuschicht (21, 21') umfasst, die das zweite Element bildet oder Teil dessen ist, wobei die Streuschicht ein Bindemittel sowie in dem Bindemittel dispergierte streuende Partikel umfasst.

13. System zur Hintergrundbeleuchtung (1, 1') oder Beleuchtung (1") nach vorstehendem Anspruch, **dadurch gekennzeichnet, dass** das Bindemittel aus den mineralischen Bindemitteln, wie Kaliumsilikaten, Natriumsilikaten, Lithiumsilikaten, Aluminiumphosphaten und Glasfritten oder Flussmitteln ausgewählt ist, dass die streuenden Partikel mineralisch und vorzugsweise Nitrate, Carbide oder Oxide, wie Siliziumdioxid, Aluminiumoxid, Zirkonoxid, Titan, Cer oder ein Gemisch aus wenigstens zwei dieser Oxide sind, und dass die Schicht eventuell Partikel umfasst, die eine UV-Strahlung im Bereich zwischen 250 und 400 nm absorbieren, wobei die absorbierenden Partikel von Oxiden mit UVstrahlungsabsorbierenden Eigenschaften gebildet sind, die aus einem der folgender Oxide oder der Mischung aus folgenden Oxiden ausgewählt sind, nämlich Titanoxid, Vanadiumoxid, Ceroxid, Zinkoxid, Manganoxid.

14. System zur Hintergrundbeleuchtung (1, 1') oder Beleuchtung (1") nach einem der vorstehenden Ansprüche, **dadurch**

**gekennzeichnet, dass** das Niedrigindexelement (22, 22', 22") eine poröse Schicht und vorzugsweise auf der Basis eines im Wesentlichen mineralischen Materials, insbesondere Siliziumdioxid, eventuell dotiert, ist.

15. System zur Hintergrundbeleuchtung (1, 1') oder Beleuchtung (1") nach vorstehendem Anspruch, **dadurch gekennzeichnet, dass** die poröse Schicht (22, 22', 22") vom Typ Sol-Gel ist und vorzugsweise Poren mit einer Größe von über oder gleich 20 nm aufweist.

16. System zur Hintergrundbeleuchtung (1, 1') oder Beleuchtung (1") nach einem der Ansprüche 14 bis 15, **dadurch gekennzeichnet, dass** die poröse Schicht (22, 22', 22") vom Typ Sol-Gel ist und die poröse Schicht geeignet ist, mit wenigstens einem Porogen in Form von Nanotropfen einer ersten Flüssigkeit, insbesondere auf Ölbasis, Nanotropfen, die in einer zweiten Flüssigkeit, insbesondere auf Wasserbasis, dispergiert sind, wobei die erste und die zweite Flüssigkeit nicht mischbar sind, und/oder mit wenigstens einem im Wesentlichen festen Porogen, insbesondere in Form von Polymerpartikeln, erhalten zu werden.

17. System zur Hintergrundbeleuchtung (1, 1') oder Beleuchtung (1") nach einem der Ansprüche 14 bis 16, **dadurch gekennzeichnet, dass** der Volumenanteil an Poren der porösen Schicht (22, 22', 22") größer oder gleich 50 %, vorzugsweise größer oder gleich 70 % ist.

18. System zur Hintergrundbeleuchtung oder Beleuchtung (1") nach einem der vorstehenden Ansprüche, **dadurch gekennzeichnet, dass** die Lichtquelle (5), insbesondere Leuchtdioden, mit der Kante des ersten Substrats (23) gekoppelt ist und dass entweder das Niedrigindexelement in Form einer durchgehenden Schicht vorliegt und die Struktur ferner ein streuendes Netz auf der Außenseite des ersten Substrats umfasst, oder das Niedrigindexelement in Form einer unterbrochenen Schicht (22') vorliegt.

19. System zur Hintergrundbeleuchtung (1, 1') oder Beleuchtung (1") nach einem der Ansprüche 1 bis 17, **dadurch gekennzeichnet, dass** es ein Paneel mit Beleuchtung über die Kante (1"), insbesondere mittels Leuchtdioden, eine Leuchtkachel (1"), insbesondere aus Glas, für die Inneneinrichtung, für den Boden, die Wand, für den Tisch, eine Arbeitsfläche, Küchentheke, Trennwand, für das Bad ist.

20. Verfahren zur Herstellung der streuenden Struktur (20, 20') des Hintergrundbeleuchtungs- oder Beleuchtungssystems nach einem der Ansprüche 1 bis 19, umfassend die folgenden aufeinanderfolgenden Schritte:

   - Ausbilden - auf dem ersten Element (23, 25') - einer Sol-Gel-Schicht, die aus einem Vorläufersol des die Niedrigindexschicht bildenden Materials und aus einem Porogen erhalten wird,
   - Abscheiden einer Streuschicht (21, 21') auf der Sol-Gel-Schicht,
   - Brennen - vorzugsweise gleichzeitiges und nach dem Abscheiden der Streuschicht - der Sol-Gel-Schicht und der Streuschicht, um das Niedrigindexelement und das zweite Element zu bilden.

21. Verfahren zur Herstellung der streuenden Struktur nach vorstehendem Anspruch, **dadurch gekennzeichnet, dass** - wenn das erste Element ein Glas, das Sol eine hydrolisierbare Verbindung, wie ein Siliziumhalogenid oder -alkoxid, dotiert oder nicht, ist, das Porogen vorzugsweise in Polymerkugel- oder Nanotropfenform vorliegt und das Bindemittel der Streuschicht auf Basis einer Glasfritte ist - das vorzugsweise gleichzeitige Brennen bei einer Temperatur von über oder gleich 580 °C durchgeführt wird.

22. Verfahren zur Herstellung der streuenden Struktur nach Anspruch 20, umfassend die folgenden Schritte: wenn das erste Element ein Glas oder ein Kunststoff, das Sol ein Kalium-, Natrium- oder Lithiumsilikat ist, das Porogen vorzugsweise in Polymerkugel- oder Nanotropfenform vorliegt und das Bindemittel der Streuschicht auf der Basis eines Kalium-, Natrium- oder Lithiumsilikat ist, das Brennen oder die Brennvorgänge bei einer Temperatur von unter oder gleich 100 °C durchgeführt wird/werden.

**Figure 1**

**Figure 2**

25'
26
1'
22'
21'
20'
13
10
12
14
11
15

**Figure 3**

I (u.a)

150

130

110

90

70

50

1    1,05    1,1    1,15    1,2    1,25    1,3    1,35    1,4

n2

C'

D'

B'

A'

**Figure 4**

1''

5

21

22''

11

23

**Figure 5**

## RÉFÉRENCES CITÉES DANS LA DESCRIPTION

### Documents brevets cités dans la description

- FR 2809496
- WO 2004025334 A
- US 2006025263 A
- US 20040258929 A
- WO 2005049757 A
- EP 1329433 A
- WO 0205683 A

### Littérature non-brevet citée dans la description

- OPTICAL GLASS DATA BOOK. SUMITA OPTICAL GLASS INC, 31 Mai 2002
- A MOIRE -FREE PLATFORM FOR LCD BACK-LIGHTING. **Olczak.** Society for Information Display, SID 2006 Digest of technical papers. 06 Juin 2006, vol. XXXVII, 1336-1339